# EUROPEAN PATENT APPLICATION

(11) **EP 4 261 546 A1**
(43) Date of publication of application: **18.10.2023**
(21) Application number: 21906402.9
(22) Date of filing: 06.12.2021
(51) Int. Cl.: G01N 35/10

(54) **SAMPLE POOLING DEVICE AND SAMPLE POOLING SYSTEM**

(30) Priority: 14.12.2020 JP 2020206444
(71) Applicant: Universal Bio Research Co., Ltd., Matsudo-shi Chiba 271-0064 (JP)
(72) Inventor: TAJIMA Hideji, Matsudo-shi, Chiba 271-0064 (JP)
(74) Representative: J A Kemp LLP
(86) International application number: PCT/JP2021/044611
(87) International publication number: WO 2022/131039

(57) **Abstract**

A sample pooling system 1000 comprises a sample pooling device 200 that pools samples, a first PCR device 300 that performs a PCR on mixed samples, and a second PCR device 400 that performs a PCR on individual samples. The sample pooling device 200 comprises a single first rack 700a that accommodates a plurality of mixed sample containers in a row in the y direction; a plurality of second racks 700c that accommodate a plurality of individual sample containers in a row in the x direction; and a plurality of dispensation nozzles 240 that dispense a plurality of individual samples from the plurality of individual sample containers accommodated by a respective second rack 700c into a respective mixed sample container. The plurality of individual sample containers accommodated by one of the second racks 700c are aligned in the x direction with one of the plurality of mixed sample containers accommodated by the first rack 700a.

## Description

### Technical Field

The present invention relates to a sample pooling device that performs pooling of samples and a sample pooling system that performs a pooling test of the samples. The present invention more particularly relates to a sample pooling device that adjusts a mixed sample from individual samples by pooling and a sample pooling system capable of performing a test of the mixed sample obtained by pooling and a test of individual samples included in the mixed sample.

### Background Art

A PCR method using polymerase chain reaction (PCR) that has become widespread with the development of genetic engineering is being used for detection of pathogens such as viruses. A sample (saliva, nasopharyngeal mucus, and the like) containing a pathogen is collected by a commercially available collection kit, nucleic acid (DNA or RNA) is extracted from the sample, the nucleic acid is amplified by the PCR method, and the pathogen is detected based on the amplified nucleic acid. The world has been exposed to a pandemic of a novel coronavirus (COVID-19) from the end of 2019. The PCR method is used for the detection of COVID-19.

The PCR method is mainly performed by human hand. However, with human hand, not only is it difficult to continuously execute a large amount of test processing, but there is also a possibility of occurrence of erroneous operation and contamination during processing steps. Thus, an automated PCR test device that performs the PCR method in an automated manner has been proposed. For example, as the automated PCR test device, a fully-automated PCR test system (geneLEAD series) provided by Precision System Science Co., Ltd. can be used. This fully-automated PCR test system can execute a PCR test by removing a sample from a sample container accommodating the sample without manual intervention.

Regarding tests for COVID-19 performed by the PCR method, the number of tests is required to be increased as infected people and close contact people thereof increase. The usage of an approach called "pooling" as that shown in Non-Patent Literature 1 has been proposed to increase the number of tests. A pooling test is executed as follows. First, individual samples (saliva, nasopharyngeal mucus, and the like) individually collected from subjects are pooled (mixed), to thereby acquire a mixed sample. Next, a PCR test is performed on the mixed sample in order to check whether a gene of a pathogen is contained. When it is determined that the mixed sample is negative as a result of the test, it can be determined that all individual samples included in the mixed sample are negative. When it is determined that the mixed sample is positive as a result of the test, whether there is infection can be determined for each individual sample by executing a test for all of the individual samples used for the adjustment of the mixed sample test.

Pooling becomes extremely effective for increasing the number of tests when tests for a large number of individual samples need to be performed in a state where the infection rate of the pathogen is low as with the test for COVID-19.

### Citation List

### Non-Patent Literature

Non-Patent Literature 1: CDC, "Interim Guidance for Use of Pooling Procedures in SARS-CoV-2 Diagnostic, Screening, and Surveillance Testing", [online], searched on December 2, 2020, Internet <https://www.cdc.gov/coronavirus/2019-ncov/lab/pooling-procedures.html>

### Summary of Invention

### Technical Problem

Even when the pooling test is employed, it is difficult to adjust a mixed sample by automatically mixing individual samples accommodated in a large number of sample containers without manual intervention. When the mixed sample is positive, a need to test each individual sample in a state before being mixed into the mixed sample arises. However, there has been intervention of manual determination regarding the correspondence relationship between the mixed sample and the individual samples. Therefore, not only does it become complicated to determine the correspondence relationship and difficult to increase the number of tests processed, but there is also a possibility of mixed samples and individual samples being mixed up.

Thus, an object of the present invention is to provide a sample pooling device that efficiently executes the adjustment of a mixed sample from individual samples. An object of the present invention is to provide a sample pooling device capable of efficiently determining the correspondence relationship between the mixed sample and the individual samples. Further, an object of the present invention is to provide a sample pooling system that efficiently executes a test of the mixed sample and the individual samples acquired from the sample pooling device.

### Solution to Problem

Each aspect of the present invention is configured as follows.

### [Aspect 1]

A sample pooling device that adjusts a mixed sample from individual samples by pooing of samples, the sample pooling device including:
one first rack that accommodates a plurality of mixed sample containers in a row in a first direction;
a plurality of second racks that accommodate a plurality of individual sample containers in a row in a second direction different from the first direction; and
a plurality of dispensation nozzles that move in the second direction in order to dispense a plurality of individual samples in the plurality of individual sample containers to the plurality of mixed sample containers, respectively. In the sample pooling device, in which the plurality of individual sample containers accommodated in one of the plurality of second racks, and one of the plurality of mixed sample containers accommodated in the first rack align in the second direction.

### [Aspect 2]

The sample pooling device according to Aspect 1, in which:
the first rack and/or the second rack includes a rack information display portion; and
the sample pooling device further includes an information reading unit that is movable in the first direction and the second direction in order to read rack identification information from the rack information display portion.

### [Aspect 3]

The sample pooling device according to Aspect 2, in which the rack information display portion is disposed on an upper surface of the first rack and/or the second rack.

### [Aspect 4]

The sample pooling device according to any one of Aspects 1 to 3, in which the sample pooling device further includes a movement unit that moves the plurality of dispensation nozzles in the second direction.

### [Aspect 5]

The sample pooling device according to any one of Aspects 1 to 4, in which:
the sample pooling device further includes a first tray to be disposed in the sample pooling device; and
the first tray accommodates the first rack, the plurality of second racks, and a plurality of dispensing tips to be attached to the plurality of dispensation nozzles.

### [Aspect 6]

The sample pooling device according to any one of Aspects 1 to 5, in which the sample pooling device further includes a plurality of lanes that accommodate the plurality of dispensing tips to be attached to the plurality of dispensation nozzles.

### [Aspect 7]

A sample pooling system that performs a pooling test of samples, the sample pooling system including:
the sample pooling device according to any one of Aspects 1 to 6;
a first PCR device that executes a PCR test of the mixed sample; and
a second PCR device that executes a PCR test of the individual samples.

### [Aspect 8]

A sample pooling system that performs a pooling test of samples, the sample pooling system including:
the sample pooling device according to Aspect 2 or 3;
a first PCR device that executes a PCR test of the mixed sample; and
a second PCR device that executes a PCR test of the individual samples, in which the first PCR device and/or the second PCR device further includes an information reading unit that is movable in the first direction and the second direction in order to read rack identification information from the rack information display portion.

### [Aspect 9]

The sample pooling system according to Aspect 7 or 8, in which:
the first rack and/or the second rack includes a rack information display portion that displays rack identification information;
the mixed sample container and/or the individual sample container includes at least one container information display portion that displays container identification information;
the sample pooling system further includes an information reading device; and
the information reading device reads container identification information of the plurality of mixed sample containers and rack identification information of the first rack in a state where the plurality of mixed sample containers are accommodated in the first rack, or reads container identification information of the plurality of individual sample containers and rack identification information of the second rack in a state where the plurality of individual sample containers are accommodated in the second rack.

### [Aspect 10]

The sample pooling system according to Aspect 9, in which the information reading device determines an order or a position of the plurality of mixed sample containers in a state where the plurality of mixed sample containers are accommodated in the first rack or determines an order or a position of the plurality of individual sample containers in a state where the plurality of individual sample containers are accommodated in the second rack.

### [Aspect 11]

The sample pooling system according to Aspect 9 or 10, in which the information reading device includes:
a first information reading unit that reads sample identification information from a side surface of the plurality of mixed sample containers or the plurality of individual sample containers;
a second information reading unit that reads rack identification information from a place above the first rack or the second rack; and
a guide portion that guides the first rack or the second rack to the first information reading unit and the second information reading unit.

### [Aspect 12]

The sample pooling system according to Aspect 11, in which:
the information reading device includes a gate portion having a rack passing port through which the first rack or the second rack is able to pass; and
the first information reading unit and the second information reading unit are disposed in the gate portion.

### [Aspect 13]

The sample pooling system according to Aspect 11 or 12, in which:
the guide portion is a guide groove in which the sample rack is slid; and
the rack passing port is positioned above the guide groove.

### [Aspect 14]

The sample pooling system according to any one of Aspects 7 to 13, further including a second tray disposed in the first PCR device, in which the second tray accommodates the first rack such that the plurality of mixed sample containers align in the first direction in a state where the plurality of mixed sample containers are accommodated in the first rack.

### [Aspect 15]

The sample pooling system according to Aspect 14, in which the first PCR device includes a plurality of PCR tubes and a plurality of thermal cyclers adjacent to the second tray.

### [Aspect 16]

The sample pooling system according to any one of Aspects 7 to 15, further including a third tray disposed in the second PCR device, in which the third tray accommodates the second rack such that the plurality of individual sample containers align in the first direction in a state where the plurality of individual sample containers are accommodated in the second rack.

### [Aspect 17]

The sample pooling system according to Aspect 16, in which the second PCR device includes a plurality of PCR tubes and a plurality of thermal cyclers adjacent to the third tray.

### [Aspect 18]

The sample pooling system according to any one of Aspects 7 to 17, in which:
a control unit of the first PCR device determines a mixed sample that is determined to be positive based on a plurality of mixed samples tests executed by the first PCR device, and transmits positive information to the sample pooling device; and
the sample pooling device further includes a positive display portion that displays a second rack related to the determined mixed sample in accordance with the received positive information.

### Advantageous Effects of Invention

The sample pooling device of the present invention is capable of efficiently executing the adjustment of the mixed sample from the individual samples. The sample pooling system of the present invention is capable of efficiently executing the test of the mixed sample and the individual samples acquired from the sample pooling device.

### Brief Description of Drawings

[Figure 1] Figure 1 is an upper perspective view showing a sample pooling system according to one embodiment of the present invention.
[Figure 2] Figure 2 shows the sample pooling system in Figure 1 in which Figure 2(a) is an upper view and Figure 2(b) is a front view.
[Figure 3] Figure 3 is an upper perspective view showing a tray storage portion in Figure 1.
[Figure 4] Figure 4 is an upper perspective view showing the sample pooling device in Figure 1.
[Figure 5] Figure 5 is an upper perspective view showing a first PCR device in Figure 1.
[Figure 6] Figure 6 is an upper perspective view showing a second PCR device in Figure 1.
[Figure 7] Figure 7 is an upper perspective view showing the movement of a first tray.
[Figure 8] Figure 8 is an upper perspective view showing the movement of a second tray and a first rack.
[Figure 9] Figure 9 is an upper perspective view showing the movement of a second rack.
[Figure 10] Figure 10 is an upper view showing the movement of the first and second racks.
[Figure 11A] Figure 11A is an upper perspective view showing an information reading device.
[Figure 11B] Figure 11B shows a sample container to be placed on the first and second racks in which Figure 11B(a) is a perspective view and Figure 11B(b) is an upper view.
[Figure 12] Figure 12 is an upper view showing the first tray.
[Figure 13] Figure 13 is an upper view showing the second tray.
[Figure 14] Figure 14 is an upper view showing a third tray.
[Figure 15] Figure 15 is a flowchart showing processing using the sample pooling system in Figure 1.

### Description of Embodiment

An embodiment according to sample pooling device and a sample pooling system of the present invention is described with reference to the drawings. In each drawing, the same parts are denoted by the same reference characters, and description is omitted, as appropriate. In each drawing, relative sizes and/or the arrangement of each part are accurately illustrated in principle, but the present invention is not limited thereto. In the embodiment of the present invention, a sample is a bio-related substance, and body fluid (for example, saliva, nasopharyngeal mucus, and the like) collected from a biological body or any dissolvable tissue can be preferably used. An x direction and a y direction of this embodiment correspond to a second direction and a first direction in the claims, respectively.

### [Basic Configuration of Sample Pooling System]

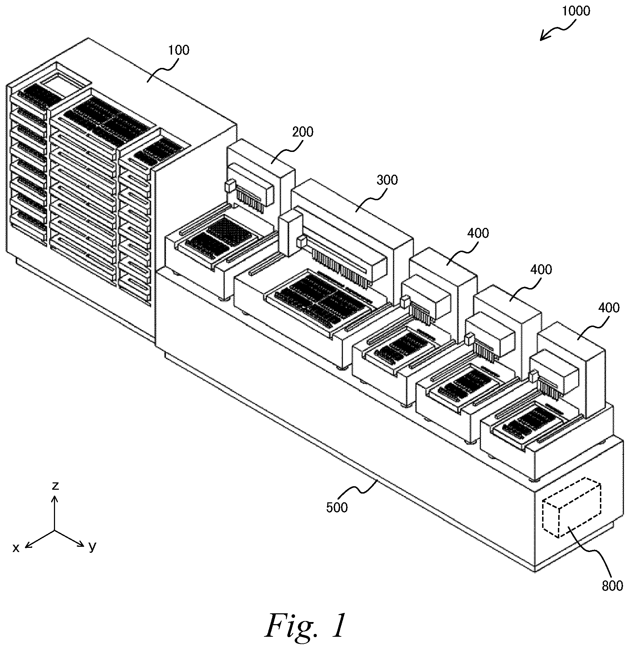

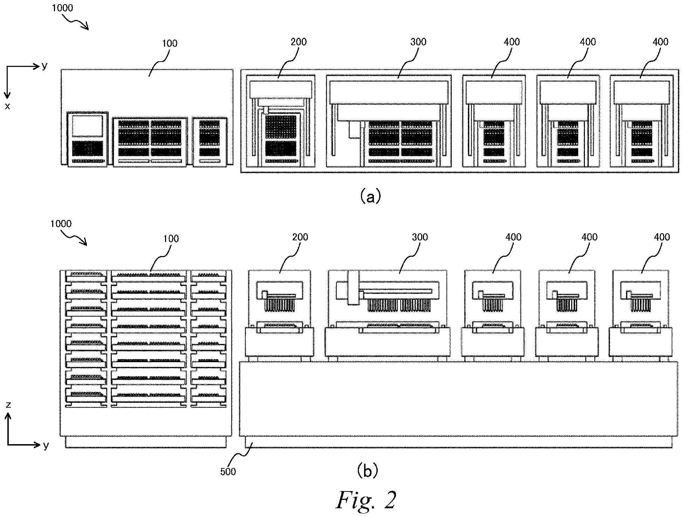

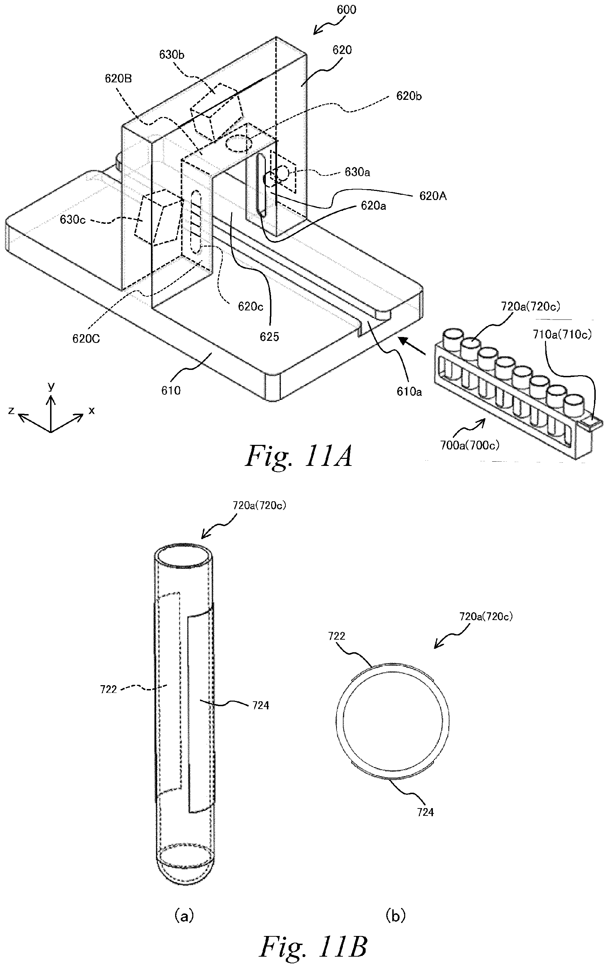

A basic configuration of a sample pooling system 1000 according to the embodiment of the present invention is described with reference to Figure 1 and Figure 2. The sample pooling system 1000 is configured by a tray storage portion 100 that stores therein a cassette-type tray, a sample pooling device 200 that adjusts a mixed sample from individual samples by pooling, a first PCR device 300 that performs a PCR test of a plurality of mixed samples, at least one second PCR device 400 that performs a PCR test of a plurality of individual samples, and a base portion 500 on which each of the devices 200, 300, and 400 is placed. The sample pooling system 1000 can preferably include an information reading device 600 (Figure 11A) that reads identification information and the like of sample containers and sample trays.

In the sample pooling system 1000, the tray storage portion 100 is disposed on the left side (one side-surface side) of the pooling device 200, and the first PCR device 300 and the second PCR device 400 are disposed on the right side (the other side-surface side) of the pooling device 200. The sample pooling system 1000 can preferably include a system control unit 800 (computer). The system control unit is communicably connected to the pooling device 200, the first PCR device 300, and the second PCR device 400, controls the operation of each device, and receives information from each device.

### [Tray Storage Portion]

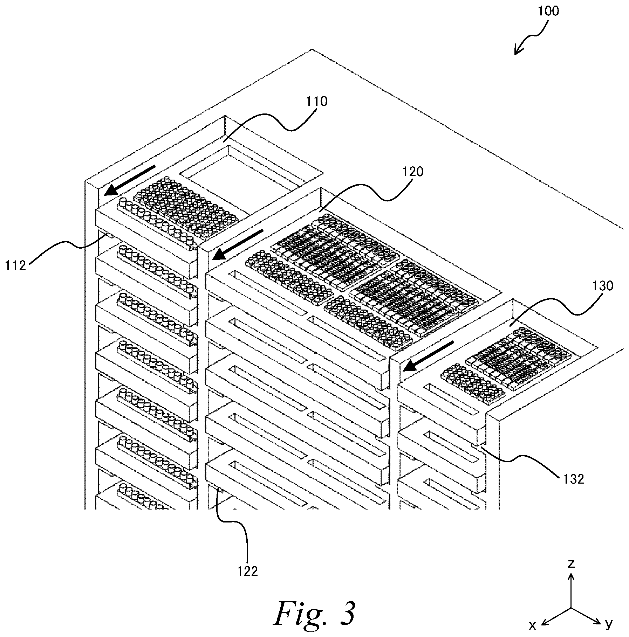

As shown in Figure 3, the tray storage portion 100 is configured from a first storage shelf 112 that accommodates a first tray 110 in a manner of being freely insertable and removable in the x direction, a second storage shelf 122 that accommodates a second tray 120 in a manner of being freely insertable and removable in the x direction, and a third storage shelf 132 that accommodates a third tray 130 in a manner of being freely insertable and removable in the x direction. The first tray 110 is a cassette-type tray used in pooling. The second tray 120 is a cassette-type tray used in a screening test of a pool sample (mixed sample). The third tray 130 is a cassette-type tray used in a secondary test of the individual samples.

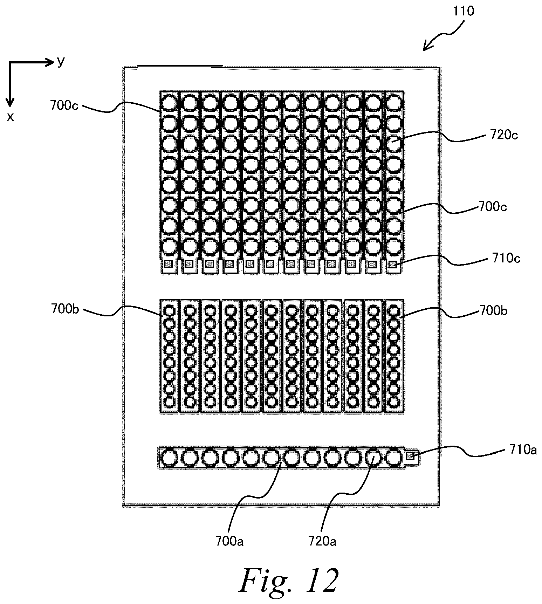

Figure 12 shows a plan view of the first tray 110. The first tray 110 accommodates one first rack 700a for the first PCR device 300, a dispensing tip accommodating portion 700b that accommodates a plurality of dispensing tips, and a plurality of second racks 700c for the second PCR device 400.

The first rack 700a extends in the y direction in Figure 12 and can accommodate a plurality of mixed sample containers 720a in a row. The mixed sample container 720a accommodates a mixed sample mixed for pooling. The plurality of second racks 700c parallelly extend in the x direction in Figure 12. Each of the second racks 700c accommodates a plurality of individual sample containers 720c. In the individual sample container 720c, an individual sample that is not mixed or pooled is accommodated. The dispensing tip accommodating portion 700b includes a plurality of lanes that parallelly extend in the x direction in Figure 12. Each lane accommodates a plurality of dispensing tips. One second rack 700c, one lane of the dispensing tip accommodating portions 700b, and one mixed sample container 720a of the first rack 700a are arranged in a row in the x direction.

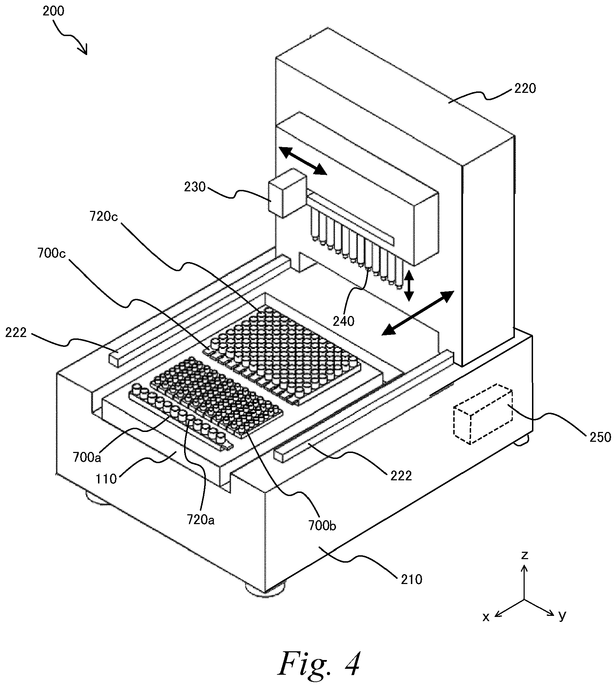

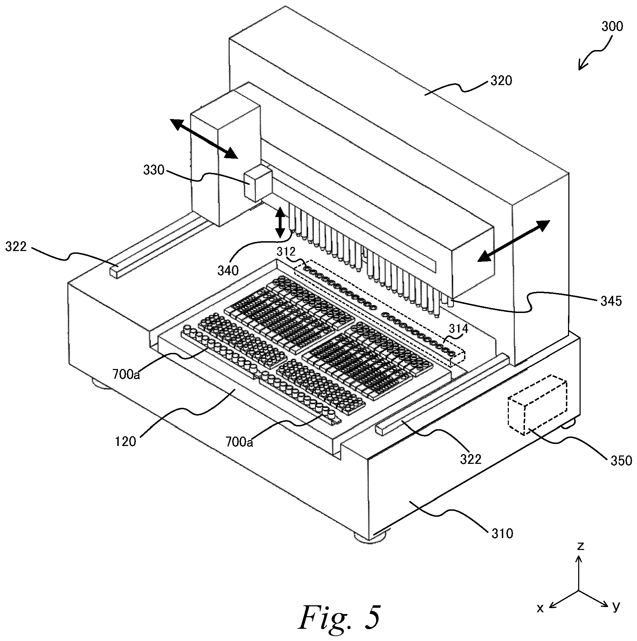

The first rack 700a includes a first rack information display portion 710a on an upper surface of one end or both ends in the longitudinal direction thereof. The first rack information display portion 710a includes first rack identification information for identifying the first rack 700a. The first rack identification information is read by the information reading device 600 (Figure 11A), an information reading unit 230 (Figure 4), and an information reading unit 330 (Figure 5) described below and is used in the determination of the first rack 700a. The first rack information display portion 710a can preferably be a two-dimensional code, and more preferably be a QR code (R), a data matrix, or a portable data file (PDF) 417.

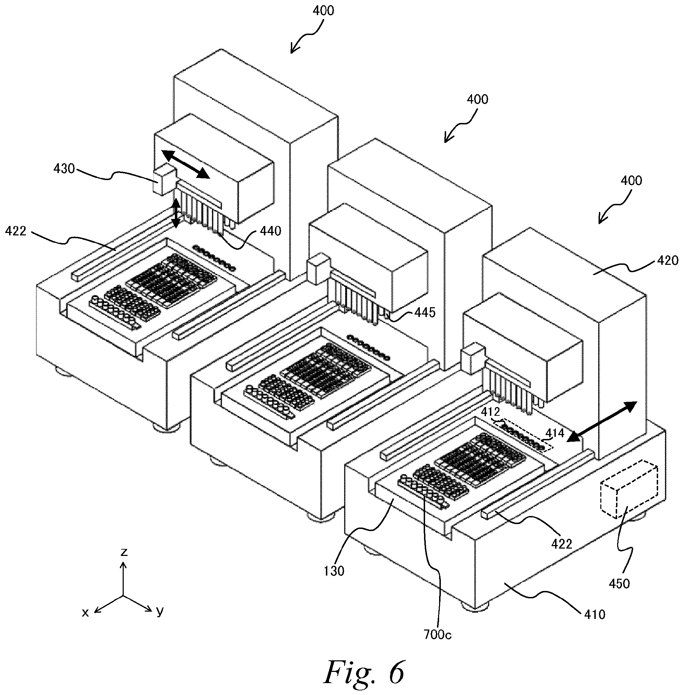

Each of the second racks 700c includes a second rack information display portion 710c on an upper surface of one end or both ends in the longitudinal direction thereof. The second rack information display portion 710c includes second rack identification information for identifying the second rack 700c. The second rack identification information is read by the information reading device 600 (Figure 11A), the information reading unit 230 (Figure 4), and an information reading unit 430 (Figure 6) described below and is used in the determination of the second rack 700c. The second rack information display portion 710c can preferably be a two-dimensional code, and more preferably be a QR code (R), a data matrix, or the PDF 417.

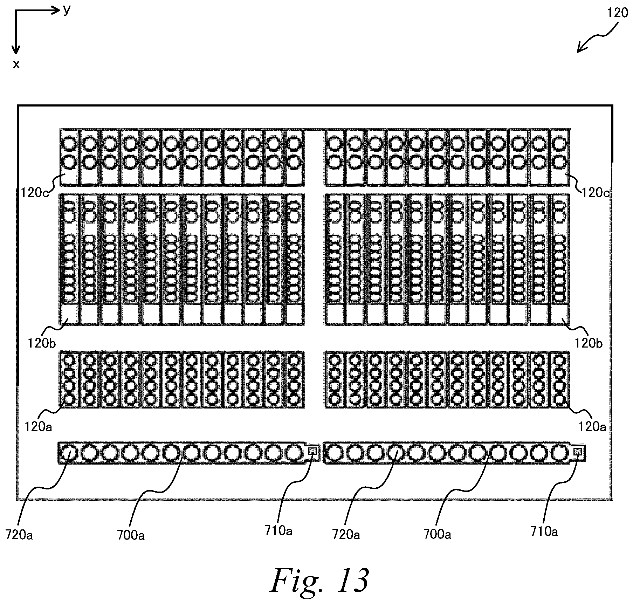

Figure 13 shows a plan view of the second tray 120. The second tray 120 accommodates a plurality of first racks 700a, a plurality of cassettes 120a for dispensing tips, a plurality of first reagent cartridges 120b, and a plurality of second reagent cartridges 120c. The longitudinal direction of the plurality of first racks 700a is disposed along the y direction.

The plurality of cassettes 120a for dispensing tips parallelly extend in the x direction in Figure 13. Each of the cassettes 120a for dispensing tips accommodates a plurality of dispensing tips and is used when extraction, purification, and PCR reaction of nucleic acid are executed. The plurality of first reagent cartridges 120b parallelly extend in the x direction in Figure 13. Each of the first reagent cartridges 120b preferably accommodates a reagent prepacked for extraction and purification of nucleic acid. The plurality of second reagent cartridges 120c parallelly extend in the x direction in Figure 13. Each of the second reagent cartridges 120c preferably accommodates a reagent prepacked for real-time PCR.

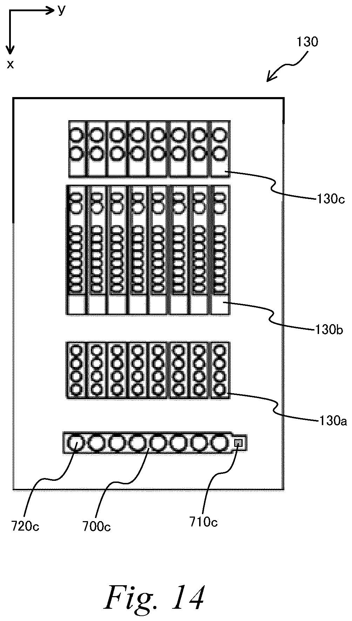

Figure 14 shows a plan view of the third tray 130. The third tray 130 accommodates one second rack 700c, a plurality of cassettes 130a for dispensing tips, a plurality of first reagent cartridges 130b, and a plurality of second reagent cartridges 130c. The longitudinal direction of the second rack 700c is disposed along the y direction.

The plurality of cassettes 130a for dispensing tips each parallelly extend in the x direction in Figure 14. Each of the cassettes 130a for dispensing tips accommodates a plurality of dispensing tips and is used when extraction, purification, and PCR reaction of nucleic acid are executed. The plurality of first reagent cartridges 130b parallelly extend in the x direction in Figure 14. Each of the first reagent cartridges 130b preferably accommodates a reagent prepacked for extraction and purification of nucleic acid. The plurality of second reagent cartridges 130c parallelly extend in the x direction in Figure 14. Each of the second reagent cartridges 130c preferably accommodates a reagent prepacked for real-time PCR.

### [Sample Pooling Device]

The sample pooling device 200 of this embodiment is described with reference to the perspective view of Figure 4. The sample pooling device 200 is configured by a base portion 210, a movement unit 220 that is disposed on the upper side of the base portion 210 and can move in the x direction, a plurality of dispensation nozzles 240 that are provided in the movement unit 220 and can move in the z direction (vertical direction), an information reading unit 230 that is provided in the movement unit 220 and can move in the y direction, and a pooling control unit (computer) 250 that controls the operation of the movement unit 220, the information reading unit 230, and the dispensation nozzles 240. The sample pooling device 200 further includes a movement unit motor for moving the movement unit 220, a dispensing-nozzle lifting/lowering motor for lifting and lowering (moving) the plurality of dispensation nozzles 240, and an information reading unit motor for moving the information reading unit 230, and the control unit 250 controls the operation of those motors in accordance with a protocol programmed in advance. The information reading unit 230 is an optical scanner such as a barcode reader. The information reading unit 230 reads first rack identification information (ID) from the first rack information display portion 710a of the first rack 700a, and/or reads second rack identification information (ID) from the second rack information display portion 710c of the second rack 700c.

The plurality of dispensation nozzles 240 are arranged in a row in the y direction. The movement unit 220 can move on a pair of rails 222, which is provided on the base portion 210 and extends in the x direction. A depressed portion that accommodates the first tray 110 is provided in an upper surface of the base portion 210. In a state where the first tray 110 is disposed in the sample pooling device 200, the first tray 110 accommodates one first rack 700a for the first PCR device 300, the dispensing tip accommodating portion 700b that accommodates a plurality of dispensing tips, and the plurality of second racks 700c for the second PCR device 400.

### [First PCR Device]

Figure 5 shows a perspective view of the first PCR device 300. The first PCR device 300 performs a PCR test of the mixed sample. The first PCR device 300 successively executes processing of extracting nucleic acid from a sample, processing of purifying the extracted nucleic acid, processing of amplifying the purified nucleic acid, and processing of detecting the amplified nucleic acid.

The first PCR device 300 is configured by a base portion 310, a movement unit 320 that is disposed on the upper side of the base portion 310 and can move in the x direction, a plurality of dispensation nozzles 340 that are provided in the movement unit 320 and can move in the z direction, the information reading unit 330 that is provided in the movement unit 320 and can move in the y direction, a light detection module 345 that is provided in the movement unit 320 and can move in the z direction, and a control unit (computer) 350 that controls the operation of the movement unit 320, the information reading unit 330, and the dispensation nozzles 340. The first PCR device 300 further includes a movement unit motor for moving the movement unit 320, a dispensing-nozzle lifting/lowering motor for lifting and lowering (moving) the plurality of dispensation nozzles 340, and an information reading unit motor for moving the information reading unit 330, and the control unit 350 controls the operation of those motors in accordance with a protocol programmed in advance. The information reading unit 330 is an optical scanner such as a barcode reader. The information reading unit 330 reads first rack identification information (ID) from the first rack information display portion 710a of the first rack 700a.

The plurality of dispensation nozzles 340 are arranged in a row in the y direction. The movement unit 320 can move on a pair of rails 322, which is provided on the base portion 310 and extends in the x direction. A depressed portion that accommodates the second tray 120 is provided in an upper surface of the base portion 310. The second tray 120 accommodates each element shown in Figure 13 in a state of being disposed in the first PCR device 300. A plurality of PCR tubes 312 are further disposed on the upper surface of the base portion 310 in a row in the y direction. A plurality of thermal cyclers 314 that execute the PCR cycle are provided below the plurality of PCR tubes 312. The plurality of PCR tubes 312 and the plurality of thermal cyclers 314 are adjacent to the second tray.

### [Second PCR Device]

Figure 6 shows a perspective view of the second PCR device 400. In this embodiment, the sample pooling system 1000 includes three second PCR devices 400, but is not limited thereto and can include one or a plurality of second PCR devices 400. The plurality of second PCR device 400 can preferably have the same structures.

The second PCR device 400 is configured by a base portion 410, a movement unit 420 that is disposed on the upper side of the base portion 410 and can move in the x direction, a plurality of dispensation nozzles 440 that are provided in the movement unit 420 and can move in the z direction, the information reading unit 430 that is provided in the movement unit 420 and can move in the y direction, a light detection module 445 that is provided in the movement unit 420 and can move in the z direction, and a control unit (computer) 450 that controls the operation of the movement unit 420, the information reading unit 430, and the dispensation nozzles 440. The second PCR device 400 further includes a movement unit motor for moving the movement unit 420, a dispensing-nozzle lifting/lowering motor for lifting and lowering (moving) the plurality of dispensation nozzles 440, and an information reading unit motor for moving the information reading unit 430, and the control unit 450 controls the operation of those motors in accordance with a protocol programmed in advance. The information reading unit 430 is an optical scanner such as a barcode reader. The information reading unit 430 reads second rack identification information (ID) from the second rack information display portion 710c of the second rack 700c.

The plurality of dispensation nozzles 440 are arranged in a row in the y direction. The movement unit 420 can move on a pair of rails 422, which is provided on the base portion 410 and extends in the x direction. A depressed portion that accommodates the third tray 130 is provided in an upper surface of the base portion 410. The third tray 130 accommodates each element shown in Figure 14 in a state of being disposed in the second PCR device 400. A plurality of PCR tubes 412 are further disposed on the upper surface of the base portion 410 in a row in the y direction. A plurality of thermal cyclers 414 that execute the PCR cycle are provided below the plurality of PCR tubes 412. The plurality of PCR tubes 412 and the plurality of thermal cyclers 414 are adjacent to the third tray.

### [Information Reading Device]

The information reading device 600 is described with reference to Figure 11A. As shown in Figure 11A, the information reading device 600 reads one or a plurality of sample identification information (sample ID) and rack identification information (rack ID) from the first rack 700a in which the plurality of mixed sample containers 720a are accommodated or the second rack 700c in which the individual sample containers 720c are accommodated. The sample information reading device 600 is configured by a plate-like base portion 610 having a guide groove (guide portion) 610a, a gate portion 620 disposed on the base portion 610 so as to stride over the guide groove 610a, and a rack passing port (rack passing space) 625 provided in the gate portion 620.

The guide groove 610a extends in an upper surface of the base portion 610 along the longitudinal direction (a z direction in Figure 11A) thereof. A part of the guide groove 610a is positioned on the lower side of the rack passing port 625. The first rack 700a or the second rack 700c in which the sample container 720a or 720c is accommodated can pass through the rack passing port 625 provided in the gate portion 620 while sliding on the guide groove 610a. The gate portion 620 preferably extends in a direction (x direction) orthogonal to the longitudinal direction.

The gate portion 620 includes a first opening portion 620c formed in a first surface (side surface) 620C that faces the rack passing port 625, a second opening portion 620b formed in a second surface (upper surface) 620B that faces the rack passing port 625, and a third opening portion 620a formed in a third surface (side surface) 620A that faces the rack passing port 625. The first opening portion 620c and/or the third opening portion 620a can preferably be elongated holes. The first opening portion 620c and/or the third opening portion 620a preferably extends in the vertical direction (y direction). It is preferred that the first opening portion 620c and the third opening portion 620a at least partially face each other. The second opening portion 620b can preferably be a circular hole. The second opening portion 620b is preferably positioned on the upper side of the guide groove 610a.

The gate portion 620 includes a first information reading unit 630c disposed on the inner side of the first opening portion 620c, a second information reading unit 630b disposed on the inner side of the second opening portion 620b, and a third information reading unit 630a disposed on the inner side of the third opening portion 620a.

The sample information reading device 600 includes a reading control unit (control board) that receives and processes each of first sample identification information read by the first information reading unit 630c, rack identification information (second sample identification information) read by the second information reading unit 630b, and third sample identification information read by the third information reading unit 630a. The sample information reading device 600 preferably includes a communication unit that transmits each sample identification information to external equipment and receives information from the external equipment, and/or a rack detection sensor (an infrared sensor, a weight sensor, or the like) that detects the intrusion of the sample racks 700a, 700c into the guide groove 610a. The external equipment can be the sample pooling system 1000.

The reading control unit controls the operation of the second information reading unit 630b, the first information reading unit 630c, and the third information reading unit 630a, preferably determines the sample identification information and the rack identification information from each data read from the third information reading unit 630a, the second information reading unit 630b, and the first information reading unit 630c, and stores the sample identification information and the rack identification information in a storage unit (database). The third information reading unit 630a and the third opening portion 620a do not necessarily need to be provided and can be omitted.

The first information reading unit 630c is an optical scanner and can preferably be a one-dimensional code reader. The second information reading unit 630b is an optical scanner and can preferably be a two-dimensional code reader. The third information reading unit 630a can preferably be a CCD camera. The control unit can preferably execute optical character recognition (OCR) of image data (third sample information) of a label and the like photographed by the third information reading unit 630a, convert the image data into character data, and use the character data.

In this embodiment, the first information reading unit 630c, the second information reading unit 630b, and the third information reading unit 630a are disposed so as to surround the rack passing port 625 in reading states different from each other (different reading regions, reading orientations, or reading angles). As a result, when at least one of the first to third information reading units emits reading light (for example, infrared light and/or laser light), a case where the reading light adversely affects the reading by entering information reading units that do not emit reading light can be prevented. When a plurality of first to third information reading units emit reading light (for example, infrared light and/or laser light), a case where the plurality of reading light correlate with each other and adversely affect reading by a reading unit that is unexpected can be prevented.

In this embodiment, as shown in Figure 11A, the first information reading unit 630c, the second information reading unit 630b, and the third information reading unit 630a are disposed so as to line up (align) in one direction (x direction) or one plane (xy plane), but do not necessarily need to be disposed so as to line up (align). For example, the first information reading unit 630c, the second information reading unit 630b, and the third information reading unit 630a can also be disposed such that the positions are shifted from each other in the longitudinal direction (z direction) along the guide groove 610a. Even when the first information reading unit 630c, the second information reading unit 630b, and the third information reading unit 630a are disposed to be shifted from each other in the longitudinal direction, each of the first information reading unit 630c, the second information reading unit 630b, and the third information reading unit 630a can photograph the inside of the rack passing port 625 from a different position. When the first information reading unit 630c, the second information reading unit 630b, and the third information reading unit 630a are disposed to be shifted from each other in the longitudinal direction, it is also possible to dispose the first information reading unit 630c such that the first information reading unit 630c is able to laterally photograph the inside of the rack passing port 625 from the horizontally direction and not diagonally from the side and dispose the second information reading unit 630b such that the second information reading unit 630b is able to photograph the inside of the rack passing port 625 downward from the perpendicular direction and not from the diagonally upper side, for example.

As shown in Figure 11B, the mixed sample container 720a and an individual sample container 720b are bottomed cylindrical containers, and a first container information display portion 722 and/or a second container information display portion 724 is provided on side surfaces thereof. A cap is not shown on the sample container in Figure 11B, but the cap can be preferably attached to the sample container holding a sample.

The first container information display portion 722 can preferably be a one-dimensional code and can more preferably be a barcode. The second container information display portion 724 can preferably be a label on which sample information can be entered and can more preferably be a label on which subject information can be entered. The subject information can be attributes of the subject, specifically, name, sex, age, sample collection date, and/or the like, for example.

### [Flowchart]

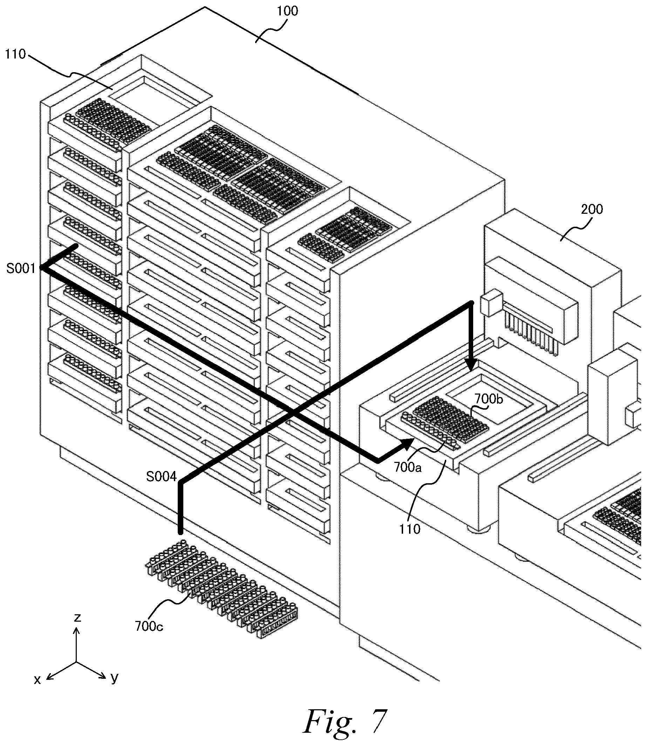

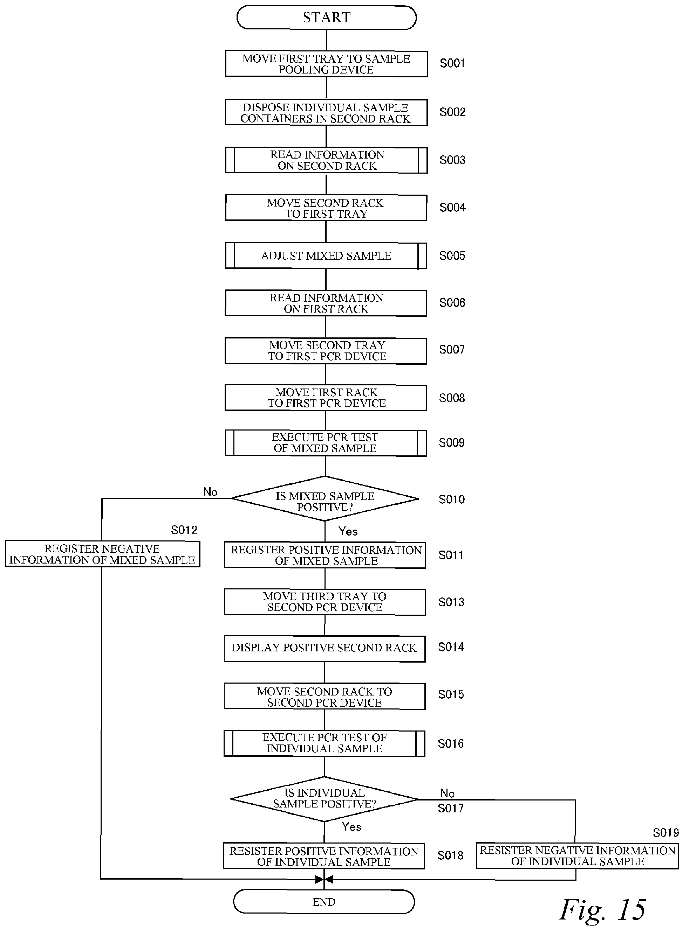

A processing method by the sample pooling system 1000 of this embodiment is described with reference to a flowchart in Figure 15. As shown in Figure 7, in Step S001, an operator disposes the first tray 110 in the sample pooling device 200. On the first tray 110, one first rack 700a is disposed in advance, and a plurality of dispensing tips are disposed in the dispensing tip accommodating portion 700b in a matrix in advance. In the first rack 700a, the plurality of mixed sample containers 720a in an empty state are disposed so as to align in the y direction.

In Step S002, the operator (worker) accommodates the plurality of individual sample containers 720c in the second rack 700c. In each of the plurality of individual sample containers, an individual sample collected from one subject is accommodated in advance.

In Step S003, as shown in Figure 11A, the information reading device 600 reads identification information from the second rack 700c slid by the operator. Specifically, the information reading device 600 reads first rack identification information from the first rack information display portion 710c of the second rack 700c. The information reading device 600 reads identification information of the individual containers from the first container information display portions 722 and/or the second container information display portions 724 of the plurality of individual sample containers 720c accommodated in the second rack 700c. A reading control unit of the information reading device 600 records the correspondence relationship between the second rack identification information and the individual sample identification information on a database (recording unit). The correspondence relationship preferably also includes the order or the positions of the plurality of individual samples accommodated in the second rack 700c arranged in a row on the second rack 700c.

In Step S004, the operator arranges the plurality of second racks 700c of which identification information has been read on the first tray 110 disposed in the pooling device 200. Each of the plurality of second racks 700c is disposed on the first tray 110 such that the individual sample containers 720c are arranged in a row in the x direction.

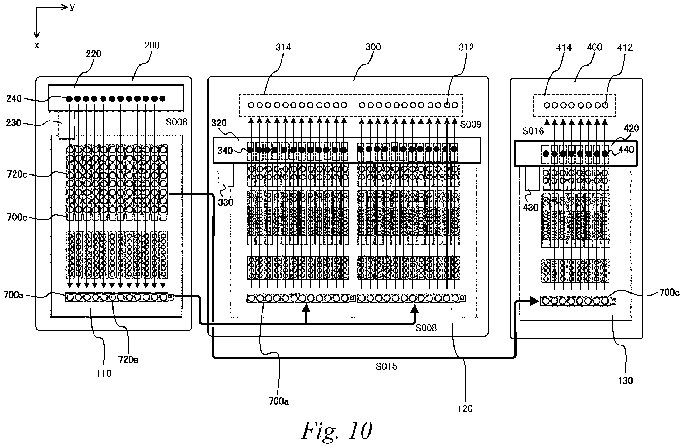

In Step S005, the sample pooling device 200 (Figure 4, Figure 10) adjusts the mixed samples. Specifically, in a state where dispensing tips are installed on the dispensation nozzles 240, the pooling control unit 250 moves the dispensation nozzles 240 in the x direction with the movement unit 220, sucks the individual samples from the individual sample containers 720c arranged in a row in the x direction, and discharges the individual samples to the mixed sample containers 720a that are disposed on the first rack 700a and line up with the rows of the individual sample containers 720c. The mixed sample containers 720a are disposed on the first rack 700a in a row in the y direction. The dispensing tip of the dispensation nozzle 240 is removed with use of a well-known tip removing mechanism and is replaced with a new dispensing tip each time an individual sample is moved from one individual sample container 720c to the mixed sample container 720a. The dispensing tip is replaced to prevent the individual sample in the individual sample container from being mixed with other samples. The well-known tip removing mechanism is described in Japanese Patent Laid-Open No. 8-320274 (US2002/0123146A1) invented by the same inventor as that of the present application, and the content thereof is incorporated by reference.

In Step S006, the control unit 250 moves the movement unit 220 in the x direction and moves the information reading unit 230 in the y direction. As a result, the information reading unit 230 reaches a place above the first rack information display portion 710a. The information reading unit 230 reads first rack identification information from the first rack information display portion 710a. The control unit 250 determines the first rack 700a based on the first rack identification information. The position of the mixed sample container 720a accommodated in the first rack 700a is determined based on the determined first rack identification information, and the position is stored in the storage unit (database).

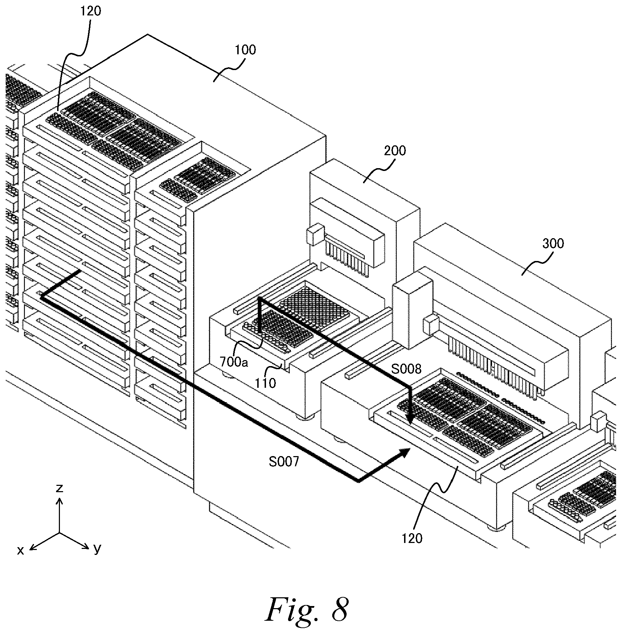

In Step S007, the operator moves the second tray 120 to the first PCR device 300 as shown in Figure 8. In Step S008, as shown in Figure 8 and 10, the operator removes the first rack 700a in which the plurality of mixed sample containers 720a are accommodated from the first tray 110 installed in the sample pooling device 200 and installs the first rack 700a onto the second tray 120 accommodated in the first PCR device 300.

In Step S009, the control unit 350 executes extraction, purification, amplification of nucleic acid, and the PCR test of the amplified nucleic acid for the mixed samples contained in the plurality of mixed sample containers on the first rack 700a in accordance with a protocol programmed in advance. In Step S010, the control unit 350 determines whether the mixed sample is positive (whether nucleic acid of a pathogen is detected) for each of the plurality of mixed samples. The extraction, purification, and amplification of nucleic acid, and the PCR test of the amplified nucleic acid are described in International Publication No. WO 2010/074265 (US2011/0262919A1) invented by the same inventor as that of the present application, and the content thereof is incorporated by reference.

In Step S010, the process proceeds to Step S011 when it is determined that the mixed sample is positive, and the process proceeds to Step S012 when it is not determined that the mixed sample is positive (when it is determined that the mixed sample is negative). In Step S011, the control unit 350 registers positive information in the storage unit (database) and transmits the positive information to the sample pooling device 200. The positive information includes identification information of the mixed sample container 720a that accommodates the positive mixed sample and identification information of the first rack 700a on which the mixed sample container 720a is mounted.

In Step S012, the control unit 350 registers negative information of the mixed sample in the storage unit, transmits the negative information to the sample pooling device 200, and ends the process. The negative information includes identification information of the mixed sample container 720a that accommodates the negative mixed sample and identification information of the first rack 700a on which the mixed sample container 720a is mounted.

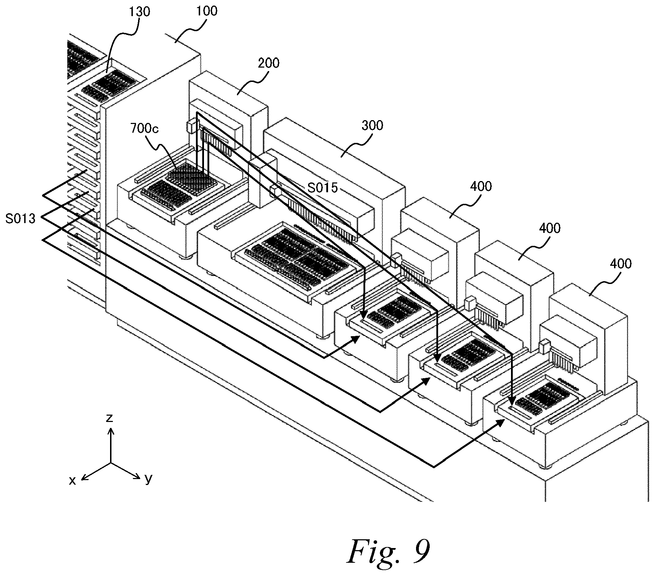

In Step S013, the operator disposes the third tray 130 in the second PCR device 400 as shown in Figure 9. In Step S014, the control unit 250 determines the second rack 700c related to the positive mixed sample on the first tray 110 disposed in the sample pooling device 200 in accordance with the positive information received from the first PCR device 300, and displays or gives notification of the position thereof. In order to display the position of the second rack 700c, the sample pooling device 200 can preferably include a positive display portion (a plurality of light emitting elements such as LEDs) provided to be adjacent to an end portion of the second rack 700c in the x direction. The operator can be notified of the position of the positive second rack 700c by light emission or flashing of the positive display portion.

In Step S015, the operator moves the second rack 700c related to the positive mixed sample from the sample pooling device 200 to the second PCR device 400 in order to determine the positive individual sample as shown in Figures 9 and 10.

In Step S016, the control unit 450 executes extraction, purification, amplification of nucleic acid, and the PCR test of the amplified nucleic acid for the individual samples included in the plurality of individual sample containers 720c on the second rack 700c in accordance with a protocol programmed in advance. In Step S017, the control unit 450 successively determines whether the individual sample is positive (whether nucleic acid of a pathogen is detected) for each of the plurality of individual samples.

In Step S017, the process proceeds to Step S018 when it is determined that the individual sample is positive, and the process proceeds to Step S019 when it is not determined that the individual sample is positive (when it is determined that the individual sample is negative). In Step S018, the control unit 450 registers the positive information of the individual sample in the storage unit, and ends the process. The positive information includes identification information of the second rack 700c that accommodates the individual sample container 720c that accommodates the positive individual sample.

In Step S019, the control unit 450 registers the negative information of the individual sample in the storage unit, and ends the process. The negative information includes identification information of the individual sample container 720c that accommodates the negative individual sample and identification information of the second rack 700c on which the individual sample container 720c is mounted.

By using the information reading device 600 and the information reading units 230, 330, and 430, the sample pooling device 200 and the sample pooling system 1000 according to this embodiment can collectively determine the correspondence relationship between the mixed samples and the individual samples in a state where the mixed sample containers 720a are accommodated in the first rack 700a and a state where the individual sample containers 720c are accommodated in the second rack 700c without the need for the operator to read identification information such as a barcode from each of the mixed sample containers 720a and the individual sample containers 720c at the time of handling of the mixed sample containers 720a and the individual sample containers 720c themselves or reaction processing of the samples.

Positive information of the mixed sample can be determined and then positive information of the corresponding individual sample can be determined on a step-by-step basis with use of a matrix configured by the individual sample containers 720c that align in the x direction on the second rack 700c and the mixed sample containers 720a that align in the y direction on the first rack 700a by the sample information display portions 722, 724 provided on each of the sample containers and the rack information display portions 710a, 710c provided on the first rack 700a and the second rack 700c.

The sample pooling system 1000 according to this embodiment can include a tray movement device including a grasping tool that grasps a tray, a grasping tool moving mechanism, and an operative mechanism (motor) thereof. The tray movement device can remove the first tray 110 from the tray storage portion 100 and move the first tray 110 to the sample pooling device 200 and/or remove the second tray 120 from the tray storage portion 100 and move the second tray 120 to the first PCR device 300 and/or remove the third tray 130 from the tray storage portion 100 and move the third tray 130 to the second PCR device 400.

The sample pooling system 1000 according to this embodiment can include a rack movement device including a grasping tool that grasps both ends of the first rack 700a and/or the second rack 700c, a clamping tool moving mechanism, and an operative mechanism (motor) thereof. The rack movement device can remove the second rack 700c from the sample pooling device 200 and move the second rack 700c to the first PCR device 300 and/or remove the first rack 700a from the sample pooling device 200 and move the first rack 700a to the second PCR device 400. The grasping tool of the rack movement device includes a grasping tool rotating mechanism that rotates about the z direction. As a result, the grasping tool can rotate by 90 degrees between a state of grasping the first rack 700a and a state of grasping the second rack 700c. Thus, both racks can be grasped by one grasping tool. Other than the grasping tool rotating mechanism, it is also possible to grasp the first rack 700a and the second rack 700c by one grasping tool by causing the sample pooling device 200 to include a grasping tool rotating mechanism that rotates the first tray about the z direction.

The sample pooling system 1000 according to this embodiment includes the tray movement device and the rack movement device. As a result, it becomes possible to significantly automate processing operation. Thus, manual intervention can be reduced, and hence human errors and the risk of contamination can be reduced. As a result, it becomes possible to perform a PCR test safely, accurately, and quickly without hospital-acquired infections and with high throughput and reduce the cost of the pooling processing.

### Reference Signs List

- 1000: sample pooling system
- 100: tray storage portion
- 110: first tray
- 120: second tray
- 130: third tray
- 200: sample pooling device
- 300: first PCR device
- 400: second PCR device
- 500: base portion
- 600: information reading device
- 700a: first rack
- 710a: first rack information display portion
- 720a: mixed sample container
- 700c: second rack
- 710c: second rack information display portion
- 720c: individual sample container
- 800: system control unit

## Claims

1. A sample pooling device that adjusts a mixed sample from individual samples by pooing of samples, the sample pooling device comprising:
one first rack that accommodates a plurality of mixed sample containers in a row in a first direction;
a plurality of second racks that accommodate a plurality of individual sample containers in a row in a second direction different from the first direction; and
a plurality of dispensation nozzles that move in the second direction in order to dispense a plurality of individual samples in the plurality of individual sample containers to the plurality of mixed sample containers, respectively, wherein
the plurality of individual sample containers accommodated in one of the plurality of second racks, and one of the plurality of mixed sample containers accommodated in the first rack align in the second direction.

2. The sample pooling device according to claim 1, wherein:
the first rack and/or the second rack includes a rack information display portion; and
the sample pooling device further includes an information reading unit that is movable in the first direction and the second direction in order to read rack identification information from the rack information display portion.

3. The sample pooling device according to claim 2, wherein the rack information display portion is disposed on an upper surface of the first rack and/or the second rack.

4. The sample pooling device according to any one of claims 1 to 3, wherein the sample pooling device further includes a movement unit that moves the plurality of dispensation nozzles in the second direction.

5. The sample pooling device according to any one of claims 1 to 4, wherein:
the sample pooling device further includes a first tray to be disposed in the sample pooling device; and
the first tray accommodates the first rack, the plurality of second racks, and a plurality of dispensing tips to be attached to the plurality of dispensation nozzles.

6. The sample pooling device according to any one of claims 1 to 5, wherein the sample pooling device further includes a plurality of lanes that accommodate the plurality of dispensing tips to be attached to the plurality of dispensation nozzles.

7. A sample pooling system that performs a pooling test of samples, the sample pooling system comprising:
the sample pooling device according to any one of claims 1 to 6;
a first PCR device that executes a PCR test of the mixed sample; and
a second PCR device that executes a PCR test of the individual samples.

8. A sample pooling system that performs a pooling test of samples, the sample pooling system comprising:
the sample pooling device according to claim 2 or 3;
a first PCR device that executes a PCR test of the mixed sample; and
a second PCR device that executes a PCR test of the individual samples, wherein
the first PCR device and/or the second PCR device further includes an information reading unit that is movable in the first direction and the second direction in order to read rack identification information from the rack information display portion.

9. The sample pooling system according to claim 7 or 8, wherein:
the first rack and/or the second rack includes a rack information display portion that displays rack identification information;
the mixed sample container and/or the individual sample container includes at least one container information display portion that displays container identification information;
the sample pooling system further includes an information reading device; and
the information reading device reads container identification information of the plurality of mixed sample containers and rack identification information of the first rack in a state where the plurality of mixed sample containers are accommodated in the first rack, or reads container identification information of the plurality of individual sample containers and rack identification information of the second rack in a state where the plurality of individual sample containers are accommodated in the second rack.

10. The sample pooling system according to claim 9, wherein the information reading device determines an order or a position of the plurality of mixed sample containers in a state where the plurality of mixed sample containers are accommodated in the first rack or determines an order or a position of the plurality of individual sample containers in a state where the plurality of individual sample containers are accommodated in the second rack.

11. The sample pooling system according to claim 9 or 10, wherein the information reading device includes:
a first information reading unit that reads sample identification information from a side surface of the plurality of mixed sample containers or the plurality of individual sample containers;
a second information reading unit that reads rack identification information from a place above the first rack or the second rack; and
a guide portion that guides the first rack or the second rack to the first information reading unit and the second information reading unit.

12. The sample pooling system according to claim 11, wherein:
the information reading device includes a gate portion having a rack passing port through which the first rack or the second rack is able to pass; and
the first information reading unit and the second information reading unit are disposed in the gate portion.

13. The sample pooling system according to claim 11 or 12, wherein:
the guide portion is a guide groove in which the sample rack is slid; and
the rack passing port is positioned above the guide groove.

14. The sample pooling system according to any one of claims 7 to 13, further comprising a second tray disposed in the first PCR device, wherein the second tray accommodates the first rack such that the plurality of mixed sample containers align in the first direction in a state where the plurality of mixed sample containers are accommodated in the first rack.

15. The sample pooling system according to claim 14, wherein the first PCR device includes a plurality of PCR tubes and a plurality of thermal cyclers adjacent to the second tray.

16. The sample pooling system according to any one of claims 7 to 15, further comprising a third tray disposed in the second PCR device, wherein the third tray accommodates the second rack such that the plurality of individual sample containers align in the first direction in a state where the plurality of individual sample containers are accommodated in the second rack.

17. The sample pooling system according to claim 16, wherein the second PCR device includes a plurality of PCR tubes and a plurality of thermal cyclers adjacent to the third tray.

18. The sample pooling system according to any one of claims 7 to 17, wherein:
a control unit of the first PCR device determines a mixed sample that is determined to be positive based on a plurality of mixed samples tests executed by the first PCR device, and transmits positive information to the sample pooling device; and
the sample pooling device further includes a positive display portion that displays a second rack related to the determined mixed sample in accordance with the received positive information.
